# EUROPEAN PATENT APPLICATION

(11) **EP 4 647 185 A1**
(43) Date of publication of application: **12.11.2025**
(21) Application number: 25174872.9
(22) Date of filing: 07.05.2025
(51) Int. Cl.: B08B 9/093, B60S 3/00

(54) **CONTAINER CLEANING SYSTEM WITH RETRACTABLE CLEANING ARMS**

(30) Priority: 07.05.2024 NL 2037636
(71) Applicant: Marine Systems B.V., 4462 HD Goes (NL)
(72) Inventor: ZWEMER, Jacobus Adriaan, 4462 HD GOES (NL)
(74) Representative: van Trier, Norbertus Henricus Gerardus

(57) **Abstract**

The invention relates to a cleaning system (1) for cleaning the inside of a container (4), wherein the cleaning system (1) comprises a base (12) that is arranged to remain outside of the container (4) and an extendable arm (13) that is extendable from the base (12) in an entry direction into the container (4), wherein the extendable arm (13) has a base end (17) that is connected to the base (12) and a distal end (18) opposite the base end (17), and wherein the cleaning system (1) comprises a cleaning tool (30) having a cleaning tool (33) body arranged at the distal end (18) of the extendable arm (13), and wherein the cleaning tool (30) has a first side wall cleaning arm (31) and a second side wall cleaning arm (32) connected to the cleaning tool body (33), wherein the first side wall cleaning arm (31) and the second side wall cleaning arm (32) each comprises a set of one or more nozzles (53, 54) at or near the distal cleaning arm end thereof, and arranged for spraying a cleaning fluid onto the inner surface of the container (4).

## Description

### BACKGROUND

The invention relates to a cleaning system and a method for cleaning the inside of a container.

GB 2 299 770 A discloses a device for cleaning the interior of a box shaped vehicle body, wherein the device comprises a rectangular-shaped framework, a main conduit, and a plurality of outwardly directed nozzles at the framework connected to the conduit for distributing liquid from the conduit outwards from the framework. When the device is moved along the interior of the box shaped body, it may be used to wash out the body.

### SUMMARY OF THE INVENTION

A disadvantage of the known cleaning device according to GB 2 299 770 A is that its dimensions closely match the dimensions of the box-shaped body. Therefore, the box-shaped body must be precisely aligned in front of the cleaning device in order to prevent collision of the device with the box-shaped body. However, this precise alignment slows down the cleaning process.

It is an object of the present invention to ameliorate or to eliminate one or more disadvantages of the known prior art, to provide an improved cleaning system or to at least provide an alternative cleaning system.

According to a first aspect, the invention provides a cleaning system for cleaning the inside of a container, wherein the container has a trailing end, a leading end and a box like body formed by at least a first side wall and a second side wall extending in a longitudinal direction between the trailing end and the leading end,
wherein the cleaning system comprises a base that is arranged to remain outside of the container, an extendable arm that is extendable from the base in an entry direction through the trailing end into the container towards the leading end thereof, wherein the extendable arm has a base end that is connected to the base and a distal end opposite the base end, and wherein the cleaning system comprises a cleaning tool having a cleaning tool body that is arranged at the distal end of the extendable arm,
wherein the cleaning tool comprises a first side wall cleaning arm and a second side wall cleaning arm each connected to the cleaning tool body, and each extending therefrom in a longitudinal arm direction between a proximal cleaning arm end and a distal cleaning arm end,
wherein the first side wall cleaning arm and the second side wall cleaning arm each comprises a set of one or more nozzles at or near the distal cleaning arm end, each set of one or more nozzles comprising a matrix of nozzles having multiple rows, preferably evenly distributed and arranged one below the other, wherein the set of one or more nozzles is arranged for spraying a cleaning fluid onto the inner surface of the first side wall and the second side wall respectively,
wherein the first side wall cleaning arm and/or the second side wall cleaning arm are moveable between an insertion position, in which the set of one or more nozzles is positioned at a distance from the respective first side wall and the second side wall when in the container, and a cleaning position, in which the set of one or more nozzles is positioned near the respective first side wall and the second side wall when in the container, wherein the cleaning tool has a maximum cleaning tool width defined by a distance between the distal cleaning arm ends of the first side wall cleaning arm and the second side wall cleaning arm transverse to the entry direction.

During use of the cleaning system according to the invention, the first side wall cleaning arm and the second side wall cleaning arm are moved into the insertion position before insertion of the cleaning tool into the container, and they are moved into the cleaning position for cleaning of the container after inserting the cleaning tool into the container. The maximum width of the cleaning tool depends on the position of the first and second side wall cleaning arms, so that movement of the respective cleaning arms between the insertion position and the cleaning position results in adjustment of the maximum width of the cleaning tool. When the first and second side wall cleaning arms are in the insertion position, the maximum width of the cleaning tool is smaller than the width of the container. As a result, the cleaning tool may be inserted into container without the need for precisely aligning the cleaning tool with respect to the container. This is advantageous as the cleaning process has become faster in comparison to the cleaning process according to the prior art.

In an embodiment, the first side wall cleaning arm and the second side wall cleaning arm are hingeably connected to the cleaning tool body via a hinge having a hinge axis. In an embodiment thereof, the hinge axis extends in a substantially vertical direction transverse to the entry direction. Hinging of the first side wall cleaning arm and the second side wall cleaning arm results in the capability of arranging the first and second side wall cleaning arms in a desired position with respect to the cleaning tool body. This is advantageous, as it allows the cleaning system to be used for a variety of containers with different widths.

In an embodiment, each of the first side wall cleaning arm and second side wall cleaning arm extends substantially parallel to the entry direction when in the insertion position. An advantage of this is that the maximum width of the cleaning tool is as close as possible to the width of the cleaning tool body, when the first and second side wall cleaning arms are in the insertion position.

In an embodiment, the set of one or more nozzles is arranged for spraying cleaning fluid in a direction substantially parallel to the longitudinal arm direction. As the direction of spraying cleaning fluid follows the movement of the first and second side wall cleaning arms, controlling the movement of the first and second side wall cleaning arms allows control of the direction of spraying cleaning fluid. This is advantageous as it allows the set of one or more nozzles to be directed at a desired part of the inner surface of the container.

In an embodiment, the set of one or more nozzles of each of the first side wall cleaning arm and the second side wall cleaning arm is arranged for spraying cleaning fluid in a direction substantially transverse to the longitudinal arm direction.

In an embodiment, the set of one or more nozzles is a first set of one or more nozzles, and wherein the first side wall cleaning arm and the second side wall cleaning arm each comprises a second set of one or more nozzles arranged for spraying cleaning fluid in a direction substantially transverse to the longitudinal arm direction. This results in that upon a single passing, for example, of the first side wall cleaning arm, the inner surface of the first side wall is sprayed by the first and second set of one or more nozzles. Thus, the first side wall is sprayed twice. This is advantageous as it results in a reliable cleaning of the inner surface of the side walls.

In an embodiment, wherein the container has a bottom wall, the first side wall cleaning arm and the second side wall cleaning arm each comprises a further set of one or more nozzles arranged near a bottom side thereof, and arranged for spraying cleaning fluid in a direction substantially towards the bottom wall. In an embodiment thereof, the further set of one or more nozzles is arranged for spraying cleaning fluid in a direction substantially transverse to the longitudinal arm direction, under a downwards sloping angle. An advantage of this embodiment is that the further set of one or more nozzles, during use, cleans the bottom wall of the container.

A further advantage may be that due to the downwards sloping angle of the further set of one or more nozzles dirt and cleaning fluid is directed towards the trailing end of the container when the cleaning tool is moving from the leading end to the trailing end of the container.

In an embodiment, a cleaning area is defined in the container during cleaning, wherein the cleaning area extends between the cleaning tool and the leading end, wherein the first side wall cleaning arm is provided with a first side wall arm shield and wherein the second side wall cleaning arm is provided with a second side wall arm shield, wherein the first side wall arm shield and the second side wall arm shield each is configured for shielding the cleaning area when in the cleaning position. This is advantageous as the first side wall arm shield and the second side wall arm shield keep heat and steam inside the cleaning area or at least reduce the rate at which the steam and heat move out of the cleaning area, thereby improving the cleaning efficiency.

In an embodiment, the container has a leading wall at the leading end, wherein the cleaning tool further comprises a leading set of one or more nozzles arranged for spraying cleaning fluid in a direction substantially parallel to the entry direction. In an embodiment thereof, the cleaning tool comprises a cleaning bar at the cleaning tool body at a side thereof facing away from the base of the cleaning system, wherein the leading set of one or more nozzles is arranged at the cleaning bar, wherein the cleaning bar is moveable with respect to the cleaning tool body along a cleaning path in a substantially vertical direction. This is advantageous as this allows the leading wall of the container to be cleaned by moving the cleaning bar along the cleaning path. Additionally, the number of nozzles provided at the front side of the cleaning tool body, *i.e.* the side facing towards the leading wall when the cleaning tool is inserted into the container, may be kept to a minimum.

In a preferred embodiment thereof, the container comprises a bottom wall, wherein the cleaning path is an L-shaped cleaning path having a substantially vertical first path part and a substantially horizontal second path part, wherein the second path part is located at the bottom side of the cleaning tool body and extends from the first path part in a direction towards the base of the cleaning system, wherein the leading set of one or more nozzles is arranged for spraying cleaning fluid in a direction substantially transverse to the cleaning path and away from the cleaning tool body. During cleaning, when the cleaning bar is moved along the first path part, the leading set of nozzles at the cleaning bar sprays cleaning fluid towards the leading wall of the container. Subsequently, when the leading bar is moved along the second path part, the leading set of one or more nozzles sprays cleaning fluid towards the bottom wall of the container, while the cleaning tool may be moved from the leading end towards the trailing end. Dirt and cleaning fluid, therefore, may be forced to flow from the top of the leading wall, first towards the bottom wall, and then over the bottom wall from the leading end towards the trailing end.

In an embodiment, the cleaning tool comprises a guiding rail that extends along the cleaning path, wherein the cleaning bar is moveably connected to the guiding rail, wherein the cleaning tool further comprises a cleaning bar drive for driving the cleaning bar to move along the guiding rail. In an embodiment thereof the cleaning bar drive comprises a roller chain. The inventor has surprisingly found that this results in a reliable moving of the cleaning bar.

In an embodiment, wherein the container comprises a top wall, the cleaning tool further comprises a top set of one or more nozzles arranged for spraying cleaning fluid in a direction towards the inner surface of the top wall. In an embodiment thereof, the cleaning tool comprises a top wall cleaning arm connected to the cleaning tool body and extending therefrom in a longitudinal arm direction between a proximal cleaning arm end and a distal cleaning arm end, wherein the top set of one or more nozzles is arranged at or near the distal cleaning arm end of the top wall cleaning arm, wherein the top wall cleaning arm is moveable between an insertion position, in which the top set of one or more nozzles is positioned at a distance from the top wall when in the container, and a cleaning position, in which the top set of one or more nozzles is positioned near the top wall when in the container, wherein the cleaning tool has a maximum cleaning tool height defined by a distance between the distal cleaning arm end of the top wall cleaning arm and the bottom side of the cleaning tool transverse to the entry direction. Preferably, the top wall cleaning arm is hingeably connected to the cleaning tool body via a top wall hinge having a horizontal hinge axis that extends transverse to the entry direction. An advantage of this embodiment is that the top set of one or more nozzles allows for cleaning the top wall of the container. As the top wall cleaning arm is moveable between the insertion position and the cleaning position, the maximum height of the cleaning tool is adjustable. As the height of the cleaning tool is smaller when in the insertion position, this allows for easy insertion of the cleaning tool into the container.

In an embodiment thereof, the top set of one or more nozzles is arranged for spraying cleaning fluid in a direction substantially transverse to the longitudinal arm direction of the top wall cleaning arm. An advantage of this is that dirt and cleaning fluid are directed towards the trailing end of the container during spraying cleaning fluid towards and onto the inner surface of the top wall.

In an embodiment thereof, when a cleaning area is defined in the container during cleaning, wherein the cleaning area extends between the cleaning tool and the leading end, wherein the first side wall cleaning arm is provided with a first side wall arm shield and wherein the second side wall cleaning arm is provided with a second side wall arm shield, wherein the first side wall arm shield and the second side wall arm shield each is configured for shielding the cleaning area when in the cleaning position, the top wall cleaning arm is provided with a top wall arm shield, wherein the top wall arm shield is configured for shielding the cleaning area when the top wall cleaning arm is in the cleaning position. This is advantageously as the top wall arm shield keeps heat and steam inside the cleaning area or at least reduce the rate at which the steam and heat move out of the cleaning area, thereby improving the cleaning efficiency.

In an embodiment, the cleaning tool has a drive that is configured for moving the first side wall cleaning arm and/or the second side wall cleaning arm between the insertion position and the cleaning position. In an embodiment thereof, when the cleaning tool comprises a top wall cleaning arm connected to the cleaning tool body and extending therefrom in a longitudinal arm direction between a proximal cleaning arm end and a distal cleaning arm end, wherein the top set of one or more nozzles is arranged at or near the distal cleaning arm end of the top wall cleaning arm, wherein the top wall cleaning arm is moveable between an insertion position, in which the top set of one or more nozzles is positioned at a distance from the top wall when in the container, and a cleaning position, in which the top set of one or more nozzles is positioned near the top wall when in the container, wherein the cleaning tool has a maximum cleaning tool height defined by a distance between the distal cleaning arm end of the top wall cleaning arm and the bottom side of the cleaning tool transverse to the entry direction, the drive is configured for moving the first side wall cleaning arm and/or the second side wall cleaning arm and/or the top wall cleaning arm between the insertion position and the cleaning position. In an even further embodiment thereof, the drive comprises a pneumatic actuator. This allows for the first side wall cleaning arm, the second side wall cleaning arm, and the top wall cleaning arm to be moved independently from each other. Therefore, the respective cleaning arms may be adjusted to the dimensions of the container, and they may be adjusted individually to compensate, for example, for oblique insertion of the cleaning tool into the container.

In an embodiment, the container comprises a leading wall at the leading end, wherein the cleaning tool comprises one or more contact sensors configured for determining whether the cleaning tool contacts the container. In an embodiment thereof, the one or more contact sensors comprise a contact bar for contacting the first side wall, the second side wall and/or the leading wall, and one or more load sensors in communication with the contact bar and configured for measuring the load exerted on the contact bar. During use, the sensors may detect when one of the first side wall cleaning arm, the second side wall cleaning arm or the cleaning tool body contacts the inner surface of the container. Upon contacting the inner surface of the container, movement of the first side wall cleaning arm, the second side wall cleaning arm, and/or the cleaning tool may be stopped. This is advantageous as the cleaning tool is prevented from being damaged by collision with the container.

In an embodiment, the cleaning system is provided with one or more base drives for moving the base in a lateral direction substantially transverse to the entry direction.

In an embodiment, the maximum cleaning tool width is an insertion width when the first side wall cleaning arm and the second side wall cleaning arm are in the insertion position, and a cleaning width when at least one of the first side wall cleaning arm and the second side wall cleaning arm is in the cleaning position, wherein the insertion width is smaller than the cleaning width. In an embodiment thereof, the insertion width is ≤0.8 times the cleaning width, in particular, wherein the insertion width is ≤0.55 times the cleaning width. The inventor has surprisingly found that this advantageously results in a relatively fast cleaning process.

In an embodiment, when the cleaning tool comprises a top wall cleaning arm connected to the cleaning tool body and extending therefrom in a longitudinal arm direction between a proximal cleaning arm end and a distal cleaning arm end, wherein the top set of one or more nozzles is arranged at or near the distal cleaning arm end of the top wall cleaning arm, wherein the top wall cleaning arm is moveable between an insertion position, in which the top set of one or more nozzles is positioned at a distance from the top wall when in the container, and a cleaning position, in which the top set of one or more nozzles is positioned near the top wall when in the container, wherein the cleaning tool has a maximum cleaning tool height defined by a distance between the distal cleaning arm end of the top wall cleaning arm and the bottom side of the cleaning tool transverse to the entry direction, the maximum cleaning tool height is an insertion height when the top wall cleaning arm is in the insertion position, and a cleaning height when the top wall cleaning arm is in the cleaning position, wherein the insertion height is smaller than the cleaning height. In an embodiment thereof, the insertion height is ≤0.9 times the cleaning height. The inventor has surprisingly found that this advantageously results in a relatively fast cleaning process.

In an embodiment the cleaning tool comprises a cleaning fluid source and a fluid pump at or near the base, wherein the fluid pump is configured for providing the cleaning tool with cleaning fluid from the cleaning fluid source.

According to a second aspect of the invention, the invention provides a cleaning tool for use in a cleaning system according to any embodiment of the first aspect of the invention, wherein the cleaning tool is a cleaning tool as described in any embodiment of the first aspect of the invention.

According to a third aspect, the invention provides a method for cleaning the inside of a container using a cleaning system according to the first aspect of the invention, wherein the method comprises the steps of:
positioning the container and the cleaning system relative to each other;
optionally, moving the first side wall cleaning arm and/or the second side wall cleaning arm from the cleaning position into the insertion position;
extending the extendable arm in the entry direction so that the cleaning tool enters the container at the trailing end and is moved from the trailing end towards the leading end, while the first side wall cleaning arm and/or the second side wall cleaning arm is in the insertion position;
before, during or after extending the extendable arm in the entry direction, activating the set of one or more nozzles to spray cleaning fluid;
moving the first side wall cleaning arm and/or the second side wall cleaning from the insertion position into the cleaning position; and
retracting the extendable arm in a direction opposite the entry direction so that the cleaning tool is moved between the leading end and the trailing end.

The method according to the invention has at least the same technical advantages as described in relation to the first aspect of the invention.

In an embodiment, at least one of the first side wall cleaning arm and the second side wall cleaning is moved from the insertion position into the cleaning position after the cleaning tool has reached the leading end of the container. In an embodiment thereof, the at least one of the first side wall cleaning arm and the second side wall cleaning arm is moved from the insertion position into the cleaning position after activation of the set of one or more nozzles to spray cleaning fluid onto the inner surface of the container.

In an embodiment, the container has a leading wall at the leading end and a bottom wall, wherein the cleaning tool further comprises a leading set of one or more nozzles arranged for spraying cleaning fluid in a direction substantially parallel to the entry direction, wherein the cleaning tool comprises a cleaning bar at the cleaning tool body at a side thereof facing away from the base of the cleaning system, wherein the leading set of one or more nozzles is arranged at the cleaning bar, wherein the cleaning bar is moveable with respect to the cleaning tool body along a cleaning path in a substantially vertical direction, wherein the cleaning path is an L-shaped cleaning path having a substantially vertical first path part and a substantially horizontal second path part, wherein the second path part is located at the bottom side of the cleaning tool body and extends from the first path part in a direction towards the base of the cleaning system, wherein the leading set of one or more nozzles is arranged for spraying cleaning fluid in a direction substantially transverse to the cleaning path and away from the cleaning tool body, wherein the method further comprises the steps of:
when the cleaning tool is at or near the leading wall, activating the leading set of one or more nozzles to spray cleaning fluid;
optionally, moving the cleaning bar towards the top of the first path part;
moving the cleaning bar along the L-shaped cleaning path over the first path part, thereby cleaning the leading wall, and thereafter, moving the cleaning bar along the L-shaped cleaning path over the second path part, thereby cleaning the bottom wall of the container partially;
when the cleaning bar is at the second path part, retracting the extendable arm in a direction opposite the entry direction so that the cleaning tool is moved between the leading end and the trailing end.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a schematic side view of a container and a cleaning system according to an embodiment of the invention;
Figure 2 is an isometric view of the cleaning system of figure 1, wherein the cleaning system comprises a cleaning tool, and wherein the cleaning tool is in a retracted condition;
Figures 3A-3B are an isometric view, and a front view, respectively, of the cleaning tool of the cleaning system of figure 1, wherein the cleaning tool is in an extracted condition;
Figures 4A-4B are an isometric view, and a front view, respectively, of the cleaning tool of the cleaning system of figure 1, wherein the cleaning tool is in the retracted condition.

### DETAILED DESCRIPTION OF THE INVENTION

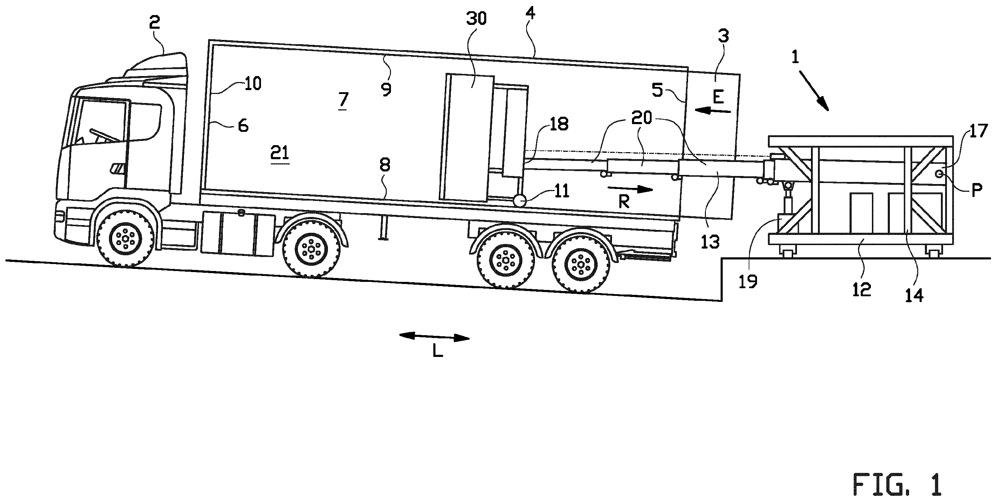

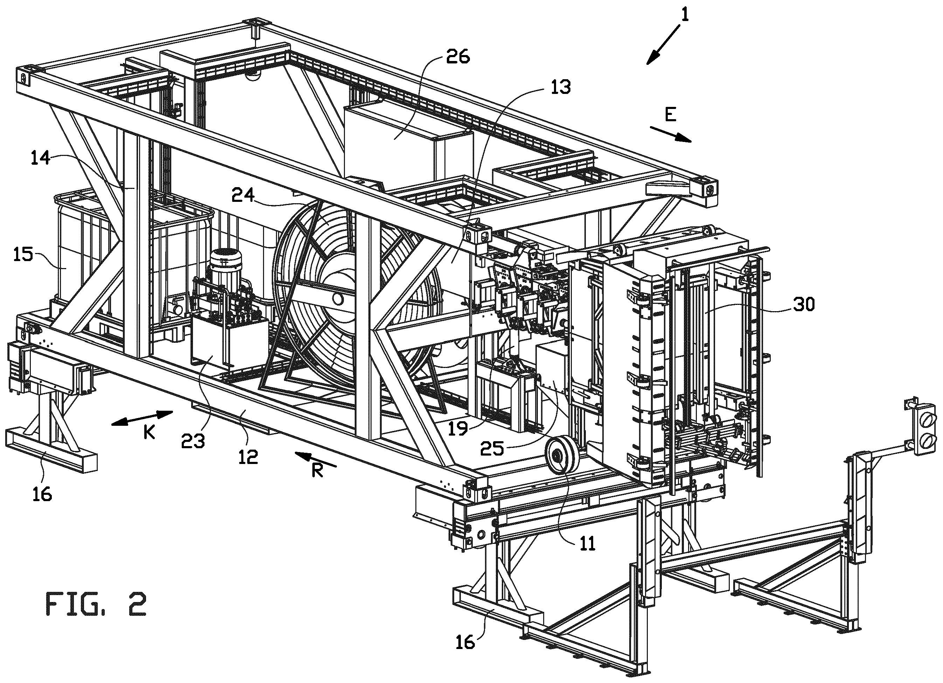

Figure 2 shows a cleaning system 1 according to an exemplary embodiment of the invention. The cleaning system 1 may be used to clean containers, in particular shipping containers or reefers, or any other box-like transport means, for example as shown in figure 1.

Figure 1 shows a schematic side-view of the cleaning system 1, and a truck and trailer combination 2 that is positioned in front of the cleaning system 1. The truck and trailer combination 2 carries a container 4. The container has a trailing end 5, a leading end 6 and a box like body formed by a plurality of walls extending between the trailing end 5 and the leading end 6 in a longitudinal direction L. The plurality of walls comprises a non-shown first side wall, a second side wall 7, a bottom wall 8 and a top wall 9 that are each parallel to the longitudinal direction L. The container 4 further comprises a leading wall 10 at the leading end 6. The inner surface of the container 4 is defined by the inner surface of the first side wall, the second side wall 7, the leading wall 10, the bottom wall 8 and the top wall 9 of the container 4. At the trailing end 5, the container 4 comprises one or more doors 3 to open and close the trailing end 5 of the container 4. During cleaning, the container 4, in particular the bottom wall 8 thereof, may be positioned at a downwardly sloping angle. In that case, the angle slopes downwards from the leading end 6 towards the trailing end 5 so that water, dirt and cleaning agents may easily be flushed out of the container 4 under the influence of gravity.

As best shown in figure 2, the cleaning system 1 comprises a base 12 that is arranged to remain outside of the container 4, an extendable arm 13 that is extendable from the base 12 in an entry direction E through the trailing end 5 into the container 4 and towards the leading end 6 thereof, and a cleaning tool 30 carried by the extendable arm 13 and configured for cleaning the inside of the container 4. In this exemplary embodiment, the base 12 comprises a frame 14 for holding various components of the cleaning system 1, such as the extendable arm 13 and one or more reservoirs 15 for water and/or cleaning agents. The base 12 has four supports 16 to stand on, and, optionally, the base 12 is horizontally movable in a lateral direction K substantially transverse or transverse to the entry direction E of the extendable arm 13 into different lateral positions relative to the container 4.

The extendable arm 13 is steplessly and/or continuously extendable in the entry direction E and retractable in a retraction direction R opposite to the entry direction E. The extendable arm 13 has a base end 17 that is connected to the base 12, in particular the frame 14 thereof, and a distal end 18 that holds the cleaning tool 30. The base end 17 is preferably hingeably coupled to the frame 14 of the base 12 so as to be pivotable about a horizontal pivot axis P transverse to the entry direction E. The base 12 is further provided with a lifting member 19 for pivoting the extendable arm 13 about the pivot axis P. The cleaning tool 30 at the distal end 18 of the extendable arm 13 may be raised or lowered with respect to the base 12 and/or the container 4, e.g. to position the cleaning tool 30 at the same level as the bottom wall 8 or to follow the sloping angle of the bottom wall 8 in the entry.

In this exemplary embodiment, the extendable arm 13 is a telescopic boom having a plurality of boom sections 20 that telescopically slide or roll into and out of one another. The combined length of the boom sections 20, when extended, is preferably sufficient to extend the extendable arm 13 over an extension stroke up to the leading end 6 of the container 4. The extendable arm 13 may alternatively comprise a different extendable mechanism, for example a scissor mechanism.

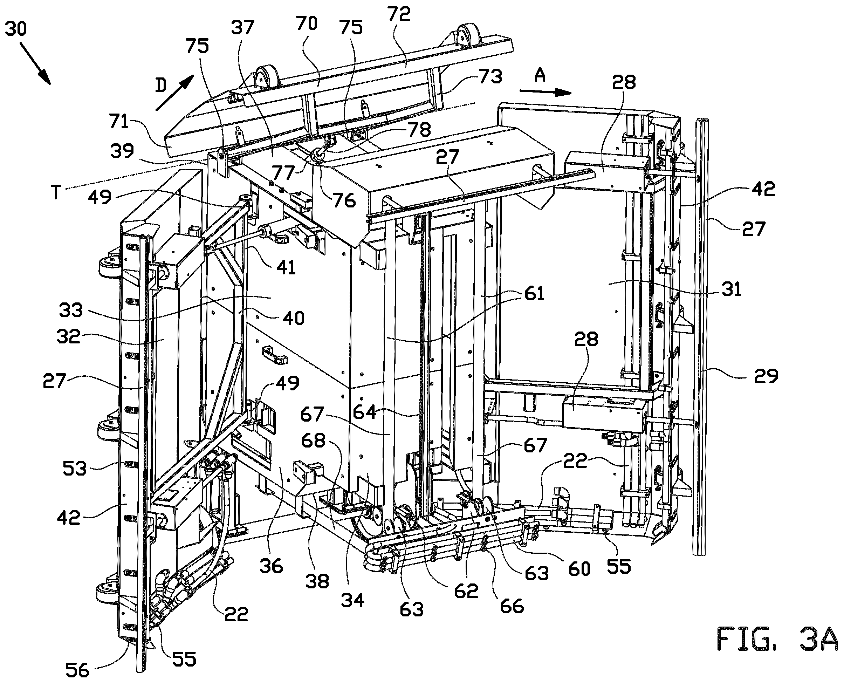

As best shown in figure 3A, the cleaning tool 30 comprises a cleaning tool body 33 having a front side 34, a first side 35, a second side 36, a top side 37, a bottom side 38, and a rear side 39 that, when the cleaning tool 30 is in the container 4, face respectively the leading wall 10, the first side wall, the second side wall 7, the top wall 9, the bottom wall 8, and the trailing end 5 of the container 4. The rear side 39 of the cleaning tool body 33 is connected to the distal end 18 of the extendable arm 13 via a non-shown connector. The cleaning tool body 33 is further provided with one or more support wheels 11 configured for rolling over the bottom wall 8 of the container 4, and to support the cleaning tool 30. In particular, the one or more support wheels 11 are arranged at the bottom side 38 of cleaning tool body 33 near the rear side 39 thereof.

The cleaning tool 30 comprises a first side wall cleaning arm 31, and a second side wall cleaning arm 32 configured for cleaning the inner surface of the container 4, in particular the first side wall and the second side wall 7 thereof. The first side wall cleaning arm 31 and the second side wall cleaning arm 32 are connected to the cleaning tool body 33 at respectively the first side 35 and the second side 36 thereof, and each extends therefrom in a longitudinal arm direction A between a proximal cleaning arm end 41 and a distal cleaning arm end 42 opposite the proximal cleaning arm end 41. The first side wall cleaning arm 31 and the second side wall cleaning arm 32 are similar, but mirrored along a vertical center plane V through the extendable arm 13 and the cleaning tool body 33, which vertical center plane V extends in the entry direction E.

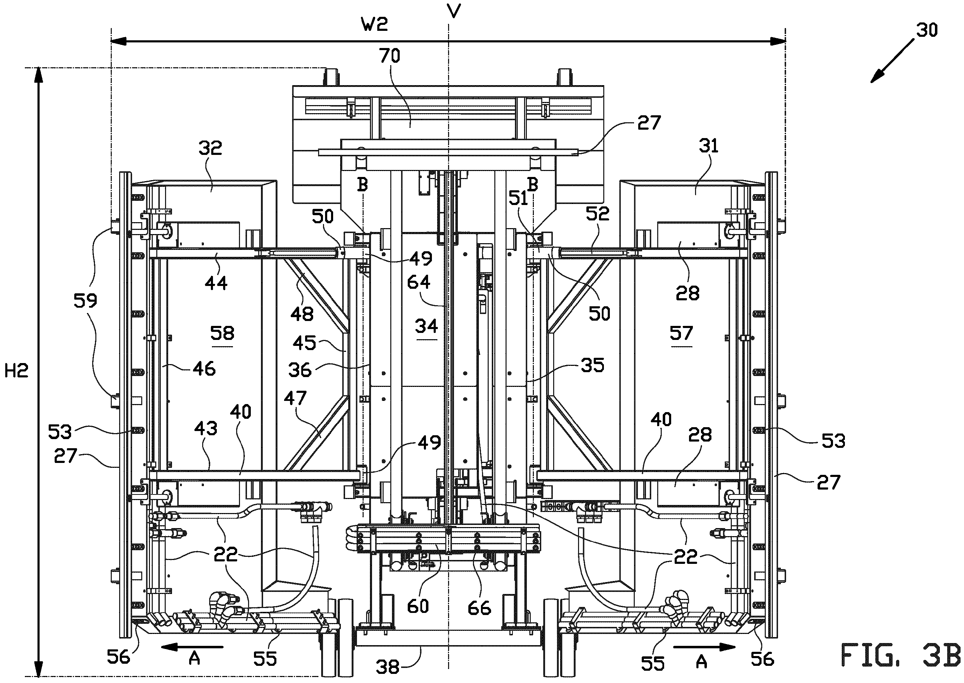

As best shown in figure 3B, each of the first side wall cleaning arm 31 and the second side wall cleaning arm 32 comprises a rectangular arm frame 40. The arm frame 40 comprises a lower transverse beam 43 and an upper transverse beam 44, that are connected to each other via a proximal beam 45 near the proximal cleaning arm end 41 and via a distal beam 46 near the distal cleaning arm end 42. The arm frame 40 is reinforced by a lower crossbar 47 between the lower transverse beam 43 and the proximal beam 45, and by an upper crossbar 48 between the upper transverse beam 44 and the proximal beam 45.

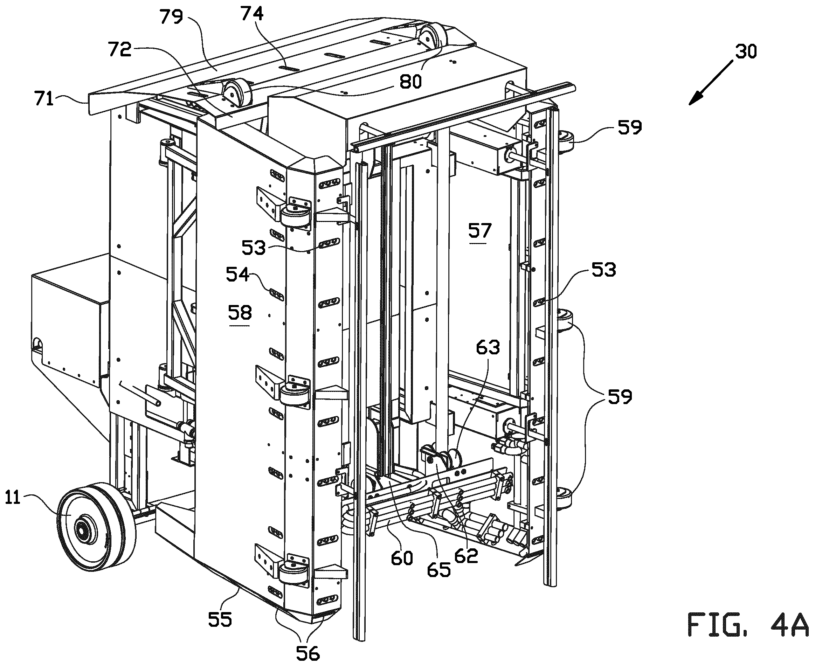

As best shown in figure 4A, the first side wall cleaning arm 31 and the second side wall cleaning arm 32 each comprises a first set of multiple nozzles 53 and a second set of multiple nozzles 54. The first set of multiple nozzles 53 is arranged at the distal cleaning arm end 42, and is arranged for spraying cleaning fluid in a direction substantially parallel or parallel to the longitudinal arm direction A. The second set of multiple nozzles 54 is arranged near the distal cleaning arm end 42, and is arranged for spraying cleaning fluid in a direction substantially transverse or transverse to the longitudinal arm direction A. Cleaning fluid may be any kind of fluid that is suitable for cleaning, for example water, cleaning agents, disinfectants or a combination thereof.

Each of the first side wall cleaning arm 31 and the second side wall cleaning arm 32 comprises a further set of multiple nozzles 55 arranged along the longitudinal arm direction A and near a bottom side of the respective first side wall cleaning arm 31 and second side wall cleaning arm 32. The further set of multiple nozzles 55 is arranged for spraying cleaning fluid in a direction substantially towards the bottom wall 8, substantially transverse or transverse to the longitudinal arm direction A, and under a downwards sloping angle.

The first set of multiple nozzles 53 and the second set of multiple nozzles 54 each comprises a matrix of nozzles having multiple rows that are evenly distributed and arranged one below the other, and multiple columns that are evenly distributed one next to the other. In this example, the first set of multiple nozzles 53 and the second set of multiple nozzles 54 each comprises 24 nozzles. The further set of multiple nozzles 55 comprises a matrix of nozzles having multiple columns that are evenly distributed and arranged one next to the other, and multiple rows that are evenly distributed one below the other. In this example, the further set of multiple nozzles 55 comprises 12 nozzles.

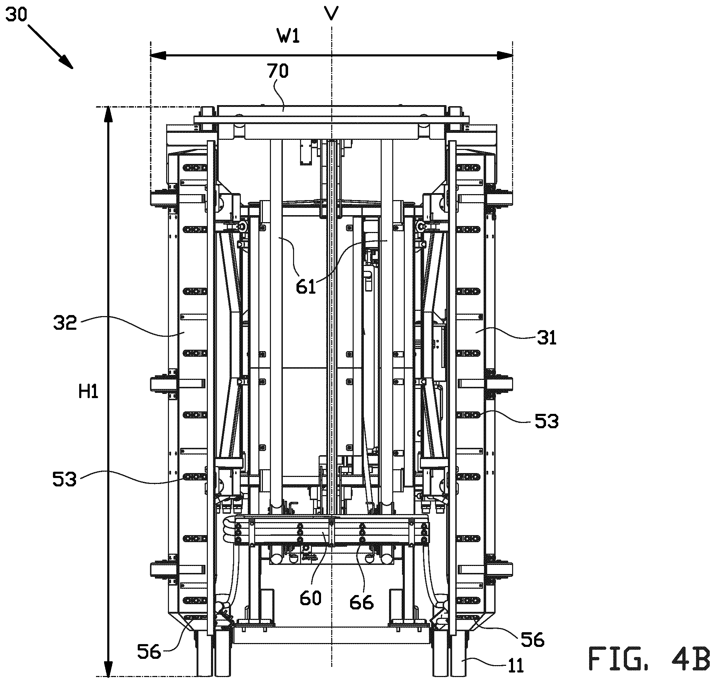

As best shown in figures 4A and 4B, the first side wall cleaning arm 31 and the second side wall cleaning arm 32 further each comprises two additional sets of multiple nozzles 56, in this example each with 3 nozzles (1 row by 3 columns), below the first set of multiple nozzles 53, and below the second set of multiple nozzles 54 respectively. The additional sets of multiple nozzles 56 are arranged for spraying cleaning fluid in a direction substantially similar to the first set of multiple nozzles 53 and the second set of multiple nozzles 54, but at an downwards sloping angle similar to the downwards sloping angle of the further set of multiple nozzles 55.

As best shown in figures 3A and 3B, the first side wall cleaning arm 31 and the second side wall cleaning arm 32 are each hingeably connected to the cleaning tool body 33 via two hinges 49 arranged above each other and having a hinge axis B. Each hinge axis B extends in a substantially vertical direction, and parallel to the vertical center plane V. The cleaning tool 30 comprises a hinge drive that is configured for hinging the first side wall cleaning arm 31 and/or the second side wall cleaning arm 32 around its hinge axis B. In this example, the cleaning tool 30 comprises two pneumatic actuators 50, each having a piston 51 and a rod 52. The pistons 51 are connected to the cleaning tool body 33 at respectively the first side 35 and second side 36 thereof, and the rods 52 are connected to the upper transverse beams 44 of the arm frames 40. The pneumatic actuators 50 may be controlled independently from each other so that the first side wall cleaning arm 31 and the second side wall cleaning arm 32 may move independently from each other. Further, each pneumatic actuator 50 is adjustable in length, caused by the hinge drive, between a fully retracted mode, wherein the pneumatic actuator 50 has its smallest length, a fully extended mode, wherein the pneumatic actuator 50 has its maximal length, and all modes in between, wherein the pneumatic actuator 50 has a length between the smallest length and the maximal length.

The first side wall cleaning arm 31 and the second side wall cleaning arm 32 are each moveable between an insertion position, as shown in figures 4A-B, and a cleaning position, as shown in figures 3A-B. Moving between the insertion position and cleaning position is caused by the hinge drive that drives the pneumatic actuators 50 to hinge the first side wall cleaning arm 31 and/or the second side wall cleaning arm 32 around the hinge axis B. In the insertion position, the distal cleaning arm end 42 of each of the first side wall cleaning arm 31 and the second side wall cleaning arm 32 is closer to the vertical center plane V compared to the cleaning position. The first side wall cleaning arm 31 and the second side wall cleaning arm 32 are arranged so that, when in the insertion position, the proximal cleaning arm end 41 is closer to the base 12 of the cleaning system 1 than the distal cleaning arm end 42. Further, when in the insertion position, the first set of multiple nozzles 53, and the second set of multiple nozzles 54 are at a distance of the respective first side wall and second side wall 7 when in the container 4. When in the cleaning position, the first set of multiple nozzles 53, and the second set of multiple nozzles 54 are near the respective first side wall and second side wall 7 when in the container 4.

As best shown in figures 3B and 4B, the cleaning tool 30 has a maximum cleaning tool width that is defined by a distance between the distal cleaning arms ends 42 of the first side wall cleaning arm 31 and the second side wall cleaning arm 32 transverse to the entry direction E. When the first side wall cleaning arm 31 and the second side wall cleaning arm 32 are in the insertion position, the maximum cleaning tool width is an insertion width W1. When at least one of the first side wall cleaning arm 31 and the second side wall cleaning arm 32 is in the cleaning position, the maximum cleaning tool width is a cleaning width W2. The insertion width W1 is smaller than the cleaning width W2 so that the cleaning tool 30 may be inserted easily into the container 4.

The insertion width W1, when both the first side wall cleaning arm 31 and the second side wall cleaning arm 32 are in the insertion position, may be ≤0.8 times the cleaning width W2, in particular ≤0.55 times the cleaning width W2, when both the first side wall cleaning arm 31 and the second side wall cleaning arm 32 are in the cleaning position.

As the first side wall cleaning arm 31 and the second side wall cleaning arm 32 are moveable between the insertion position and the cleaning position, the orientation of the first set of multiple nozzles 53, the second set of multiple nozzles 54, the further set of multiple nozzles 55, and the additional sets of multiple nozzles 56 relative to the container 4 changes. This change in orientation relative to the container 4 corresponds to an angular twist of the respective first side wall cleaning arm 31 and the second side wall cleaning arm 32 around the hinge axis B.

As best shown in figure 3A, the cleaning tool 30 further comprises a top wall cleaning arm 70 that is configured for cleaning the inner surface of the top wall 9 of the container 4. The top wall cleaning arm 70 is connected to the top side 37 of the cleaning tool body 33, and extends therefrom in a longitudinal arm direction D between a proximal cleaning arm end 71 and a distal cleaning arm end 72 opposite the proximal cleaning arm end 71. The top wall cleaning arm 70 comprises a top arm frame 73 and a top set of multiple nozzles 74 near the distal cleaning arm end 72, and arranged for spraying cleaning fluid onto the inner surface of the top wall 9. The top set of multiple nozzles 74 is arranged for spraying cleaning fluid in a direction substantially transverse or transverse to the longitudinal arm direction D.

As best shown in figure 4A, the top set of multiple nozzles 74 comprises a matrix of nozzles having multiple rows that are evenly distributed and arranged one next to the other in the longitudinal arm direction D, and multiple columns that are evenly distributed one next to the other transverse to the longitudinal arm direction D. In this example, the top set of multiple nozzles 74 comprises 18 nozzles.

The top wall cleaning arm 70 is hingeably connected to the cleaning tool body 33 via a two top hinges 75 arranged next to each other and having a horizontal top hinge axis T. The top hinge axis T extends substantially transverse or transverse to the entry direction E. The hinge drive is configured for hinging the top wall cleaning arm 70 around the top hinge axis T. In this example, the cleaning tool comprises a further pneumatic actuator 76 having a piston 77 and a rod 78. The piston 77 is connected to the cleaning tool body 33 at the top side 37 thereof, and the rod 78 is connected to the top arm frame 73. The further pneumatic actuator 76 may be controlled independently from the pneumatic actuators 50 that hinge the first side wall cleaning arm 31 and the second side wall cleaning arm 32 around the hinge axis B, so that the top wall cleaning arm 70 may move independently from the first side wall cleaning arm 31 and the second side wall cleaning arm 32.

The top wall cleaning arm 70 is moveable between an insertion position and a cleaning position. Figures 4A-B show the cleaning tool 30 while the top wall cleaning arm 70 is in the insertion position, and figures 3A-B show the cleaning tool 30 while the top wall cleaning arm 70 is in the cleaning position. Moving between the insertion position and the cleaning position is caused by the hinge drive that drives the further pneumatic actuator 76 to hinge the top wall cleaning arm 70 around the top hinge axis T. The top wall cleaning arm 70 is arranged so that, when in the insertion position, the proximal cleaning arm end 71 thereof is closer to the base 12 of the cleaning system 1 than the distal cleaning arm end 72 of the top wall cleaning arm 70. In the insertion position, the top set of multiple nozzles 74 is at a distance from the top wall 9 when in the container 4. When in the cleaning position, the top set of multiple nozzles 74 is near the top wall 9 when in the container 4.

As best shown in figures 3B and 4B, the cleaning tool 30 has a maximum cleaning tool height that is defined by a distance between the distal cleaning arm end 72 of the top wall cleaning arm 70 and the bottom side of the cleaning tool 30, in this example the support wheels 11. When the top wall cleaning arm 70 is in the insertion position, the maximum cleaning tool height is an insertion height H1. When the top wall cleaning arm 70 is in the cleaning position, the maximum cleaning tool height is a cleaning height H2. The insertion height H1 is smaller than the cleaning height H1 so that the cleaning tool 30 may be inserted easily into the container 4. The insertion height H1 may be ≤0.9 times the cleaning height H2.

As the top wall cleaning arm 70 is moveable between the insertion position and the cleaning position, the orientation of the top set of multiple nozzles 74 relative to the container 4 changes. This change in orientation relative to the container 4 corresponds to an angular twist of the top wall cleaning arm 70 around the top hinge axis T.

The cleaning tool 30 further comprises a cleaning bar 60, and two L-shaped guiding rails 61. The L-shaped guiding rails 61 are connected to the cleaning tool body 33 and extend parallel to each other along the front side 34 and the bottom side 38 of the cleaning tool body 33. The cleaning bar 60 is moveably connected to the guiding rails 61 via two rail connectors 62, in order to follow an L-shaped cleaning path formed along the L-shaped guiding rails 61. The rail connectors 62 each comprise multiple guiding wheels 63 for enclosing the guiding rails 61. The cleaning tool 30 further comprises an L-shaped roller chain 64 arranged at the cleaning tool body 33 in between the guiding rails 61. The cleaning bar 60 is connected to the roller chain 64 via a chain connector 65. The roller chain 64 is configured for moving the cleaning bar 60 along the guiding rails 61 to follow the L-shaped cleaning path. The L-shaped guiding rails 61 have a substantially vertical or vertical first rail part 67, defining a first path part, at the front side 34 of the cleaning tool body 33, and a substantially horizontal or horizontal second rail part 68, defining a second path part, at bottom side 38 of the cleaning tool body 33. The second rail part 68 extends from the first rail part 67 in a direction towards the base 12 of the cleaning system 1.

The cleaning tool 30 comprises a leading set of multiple nozzles 66 that is arranged for spraying cleaning fluid onto at least a part of the inner surface of the leading wall 10 and the bottom wall 8. The leading set of multiple nozzles 66 is arranged at the cleaning bar 60, and is arranged for spraying cleaning fluid in a direction substantially transverse or transverse to the L-shaped cleaning path and away from the cleaning tool body 33.

As best shown in figure 3B, the leading set of multiple nozzles 66 comprises a matrix of nozzles having multiple columns that are evenly distributed and arranged one next to the other, and multiple rows that are evenly distributed one above the other, when the cleaning bar in at the first rail part 67. In this example, the leading set of multiple nozzles 66 comprises 12 nozzles. When the cleaning bar 60 is at the front side 34 of the cleaning tool body 33 at the first rail part 67, the leading set of multiple nozzles 66 is arranged for spraying cleaning fluid onto the leading wall 10 of the container 4, and when the cleaning bar 60 is at the bottom side 38 of the cleaning tool body 33 at the second rail part 68, the leading set of multiple nozzles 66 is arranged for spraying cleaning fluid onto the bottom wall 8 of the container 4.

During cleaning, a cleaning area 21 is defined in the container 4. The cleaning area 21 extends between the cleaning tool 30 and the leading end 6 of the container 4. The first side wall cleaning arm 31 is provided with a plate-shaped first side wall arm shield 57 and the second side wall cleaning arm 32 is provided with a plate-shaped second side wall arm shield 58. The first side wall arm shield 57 and the second side wall arm shield 58 are each configured for shielding the cleaning area 21 of the container 4 when in the cleaning position. The first side wall arm shield 57 and the second side wall arm shield 58 are each arranged at the arm frame 40 of the respective first side wall cleaning arm 31 and the second side wall cleaning arm 32, at a side thereof opposite the cleaning tool body 33, when the respective first side wall cleaning arm 31 and the second side wall cleaning arm 32 is in the insertion position. The first side wall arm shield 57 and the second side wall arm shield 58 each comprises one or more arm wheels 59 that guide the cleaning tool 30 along respectively the first side wall and the second side wall 7 during cleaning.

The top wall cleaning arm 70 is provided with a plate-shaped top wall arm shield 79 that is configured for shielding the cleaning area 21 of the container 4 when in the cleaning position. The top wall arm shield 79 is arranged at the top arm frame 73 at a side thereof opposite the cleaning tool body 33, when the top wall cleaning arm 70 is in the insertion position. The top wall arm shield 79 comprises one or more arm wheels 80 that guide the cleaning tool 30 along the top wall 9 during cleaning.

As best shown in figures 2 and 3A, the cleaning system 1 comprises a cleaning fluid source, in this example located at the base 12 in the reservoirs 15, a pump 23 at the base 12, a cleaning fluid pipe 24, a fluid control center 25, and nozzle pipes 22. The first and second sets of multiple nozzles 53, 54, the further set of multiple nozzles 55, the additional sets of multiple nozzles 56, the leading set of multiple nozzles 66, and the top set of multiple nozzles 74 are provided with cleaning fluid via the nozzle pipes 22. The nozzle pipes 22 are in fluid connection with the fluid control center 25 that is located at the rear side 39 of the cleaning tool body 33 below the extendable arm 13. The fluid control center 25 divides and controls flow of cleaning fluid towards each of the first and second sets of multiple nozzles 53, 54, the further sets of multiple nozzles 55, the additional sets of multiple nozzles 56, the leading set of multiple nozzles 66, and the top set of multiple nozzles 74. The fluid control center 25 is provided with cleaning fluid via the cleaning fluid pipe 24 that is in fluid connection with the pump 23. The pump 23 pumps cleaning fluid from the cleaning fluid source 15 through the cleaning fluid pipe 24 towards the fluid control center 25. Cleaning fluid is then distributed by the fluid control center 25 over the nozzle pipes 22 towards the respective sets of multiple nozzles 53, 54, 55, 56, 66, 74.

As best shown in figures 2, 3A and 4A, the cleaning system 1 further comprises a control unit 26 and a plurality of sensors 27 that are operationally and/or electronically connected or connectable to the control unit 26. The plurality of sensors 27 are arranged for determining whether the cleaning tool 30 contacts the container 4. In this exemplary embodiment, the cleaning system 1 comprises three sensors 27 that each comprises one or more load sensors 28 and a bar-shaped contact bar 29 for contacting the inside of the container 4. The load sensors 28 measure the load exerted onto the cleaning tool 30 when the respective contact bar 29 contacts the leading wall 10, the first side wall, or the second side wall 7. When the load exceeds a predefined threshold, extension of the extendable arm 13, hinging of the first side wall cleaning arm 31 and/or hinging of the second side wall cleaning arm 32 into the cleaning position is stopped to prevent damage to the cleaning system 1.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Cleaning system for cleaning the inside of a container, wherein the container has a trailing end, a leading end and a box like body formed by at least a first side wall and a second side wall extending in a longitudinal direction between the trailing end and the leading end,
wherein the cleaning system comprises a base that is arranged to remain outside of the container, an extendable arm that is extendable from the base in an entry direction through the trailing end into the container towards the leading end thereof, wherein the extendable arm has a base end that is connected to the base and a distal end opposite the base end, and wherein the cleaning system comprises a cleaning tool having a cleaning tool body that is arranged at the distal end of the extendable arm,
wherein the cleaning tool comprises a first side wall cleaning arm and a second side wall cleaning arm each connected to the cleaning tool body, and each extending therefrom in a longitudinal arm direction between a proximal cleaning arm end and a distal cleaning arm end, wherein the first side wall cleaning arm and the second side wall cleaning arm are hingeably connected to the cleaning tool body via a hinge having a hinge axis extending in a substantially vertical direction transverse to the entry direction,
wherein the first side wall cleaning arm and the second side wall cleaning arm each comprises a set of one or more nozzles at or near the distal cleaning arm end, each set of one or more nozzles comprising a matrix of nozzles having multiple rows, preferably evenly distributed and arranged one below the other, wherein the set of one or more nozzles is arranged for spraying a cleaning fluid onto the inner surface of the first side wall and the second side wall respectively,
wherein the first side wall cleaning arm and/or the second side wall cleaning arm are moveable between an insertion position, in which the set of one or more nozzles is positioned at a distance from the respective first side wall and the second side wall when in the container, and a cleaning position, in which the set of one or more nozzles is positioned near the respective first side wall and the second side wall when in the container, wherein the cleaning tool has a maximum cleaning tool width defined by a distance between the distal cleaning arm ends of the first side wall cleaning arm and the second side wall cleaning arm transverse to the entry direction.

2. Cleaning system for cleaning the inside of a container according to any one of the preceding claims, wherein each of the first side wall cleaning arm and second side wall cleaning arm extends substantially parallel to the entry direction when in the insertion position; and/or
wherein the set of one or more nozzles is arranged for spraying cleaning fluid in a direction substantially parallel to the longitudinal arm direction; and/or
wherein the set of one or more nozzles of each of the first side wall cleaning arm and the second side wall cleaning arm is arranged for spraying cleaning fluid in a direction substantially transverse to the longitudinal arm direction; and/or
wherein the set of one or more nozzles is a first set of one or more nozzles, and wherein the first side wall cleaning arm and the second side wall cleaning arm each comprises a second set of one or more nozzles arranged for spraying cleaning fluid in a direction substantially transverse to the longitudinal arm direction.

3. Cleaning system for cleaning the inside of a container according to any one of the preceding claims, wherein the container has a bottom wall, wherein the first side wall cleaning arm and the second side wall cleaning arm each comprises a further set of one or more nozzles arranged near a bottom side thereof, and arranged for spraying cleaning fluid in a direction substantially towards the bottom wall, preferably wherein the further set of one or more nozzles is arranged for spraying cleaning fluid in a direction substantially transverse to the longitudinal arm direction, under a downwards sloping angle.

4. Cleaning system for cleaning the inside of a container according to any one of the preceding claims, wherein a cleaning area is defined in the container during cleaning, wherein the cleaning area extends between the cleaning tool and the leading end, wherein the first side wall cleaning arm is provided with a first side wall arm shield and wherein the second side wall cleaning arm is provided with a second side wall arm shield, wherein the first side wall arm shield and the second side wall arm shield each is configured for shielding the cleaning area when in the cleaning position; and/or
wherein the container has a leading wall at the leading end, wherein the cleaning tool further comprises a leading set of one or more nozzles arranged for spraying cleaning fluid in a direction substantially parallel to the entry direction.

5. Cleaning system for cleaning the inside of a container according to claim 4, wherein the cleaning tool comprises a cleaning bar at the cleaning tool body at a side thereof facing away from the base of the cleaning system, wherein the leading set of one or more nozzles is arranged at the cleaning bar, wherein the cleaning bar is moveable with respect to the cleaning tool body along a cleaning path in a substantially vertical direction, preferably wherein the container comprises a bottom wall, wherein the cleaning path is an L-shaped cleaning path having a substantially vertical first path part and a substantially horizontal second path part, wherein the second path part is located at the bottom side of the cleaning tool body and extends from the first path part in a direction towards the base of the cleaning system, wherein the leading set of one or more nozzles is arranged for spraying cleaning fluid in a direction substantially transverse to the cleaning path and away from the cleaning tool body.

6. Cleaning system for cleaning the inside of a container according to claim 5, wherein the cleaning tool comprises a guiding rail that extends along the cleaning path, wherein the cleaning bar is moveably connected to the guiding rail, wherein the cleaning tool further comprises a cleaning bar drive for driving the cleaning bar to move along the guiding rail, preferably wherein the cleaning bar drive comprises a roller chain.

7. Cleaning system for cleaning the inside of a container according to any one of the preceding claims, wherein the container comprises a top wall, wherein the cleaning tool further comprises a top set of one or more nozzles arranged for spraying cleaning fluid in a direction towards the inner surface of the top wall.

8. Cleaning system for cleaning the inside of a container according to claim 6, wherein the cleaning tool comprises a top wall cleaning arm connected to the cleaning tool body and extending therefrom in a longitudinal arm direction between a proximal cleaning arm end and a distal cleaning arm end, wherein the top set of one or more nozzles is arranged at or near the distal cleaning arm end of the top wall cleaning arm, wherein the top wall cleaning arm is moveable between an insertion position, in which the top set of one or more nozzles is positioned at a distance from the top wall when in the container, and a cleaning position, in which the top set of one or more nozzles is positioned near the top wall when in the container, wherein the cleaning tool has a maximum cleaning tool height defined by a distance between the distal cleaning arm end of the top wall cleaning arm and the bottom side of the cleaning tool transverse to the entry direction, preferably wherein the top wall cleaning arm is hingeably connected to the cleaning tool body via a top wall hinge having a horizontal hinge axis that extends transverse to the entry direction, preferably wherein the top set of one or more nozzles is arranged for spraying cleaning fluid in a direction substantially transverse to the longitudinal arm direction of the top wall cleaning arm.

9. Cleaning system for cleaning the inside of a container according to claim 9, when dependent on claim 4, wherein the top wall cleaning arm is provided with a top wall arm shield, wherein the top wall arm shield is configured for shielding the cleaning area when the top wall cleaning arm is in the cleaning position.

10. Cleaning system for cleaning the inside of a container according to any one of the preceding claims, wherein the cleaning tool has a drive that is configured for moving the first side wall cleaning arm and/or the second side wall cleaning arm between the insertion position and the cleaning position.

11. Cleaning system for cleaning the inside of a container according to claim 10, when dependent on claim 8, wherein the drive is configured for moving the first side wall cleaning arm and/or the second side wall cleaning arm and/or the top wall cleaning arm between the insertion position and the cleaning position, preferably wherein the drive comprises a pneumatic actuator.

12. Cleaning system for cleaning the inside of a container according to any one of the preceding claims, wherein the container comprises a leading wall at the leading end, wherein the cleaning tool comprises one or more contact sensors configured for determining whether the cleaning tool contacts the container, preferably wherein the one or more contact sensors comprise a contact bar for contacting the first side wall, the second side wall and/or the leading wall, and one or more load sensors in communication with the contact bar and configured for measuring the load exerted on the contact bar; and/or
wherein the cleaning system is provided with one or more base drives for moving the base in a lateral direction substantially transverse to the entry direction; and/or
wherein the cleaning tool comprises a cleaning fluid source and a fluid pump at or near the base, wherein the fluid pump is configured for providing the cleaning tool with cleaning fluid from the cleaning fluid source.

13. Cleaning system for cleaning the inside of a container according to any one of the preceding claims, wherein the maximum cleaning tool width is an insertion width when the first side wall cleaning arm and the second side wall cleaning arm are in the insertion position, and a cleaning width when at least one of the first side wall cleaning arm and the second side wall cleaning arm is in the cleaning position, wherein the insertion width is smaller than the cleaning width, preferably wherein the insertion width is ≤0.8 times the cleaning width, in particular, wherein the insertion width is ≤0.55 times the cleaning width; and/or
wherein the maximum cleaning tool height is an insertion height when the top wall cleaning arm is in the insertion position, and a cleaning height when the top wall cleaning arm is in the cleaning position, wherein the insertion height is smaller than the cleaning height, preferably wherein the insertion height is ≤0.9 times the cleaning height.

14. Method for cleaning the inside of a container using a cleaning system according to any one of the preceding claims, wherein the method comprises the steps of:
positioning the container and the cleaning system relative to each other;
optionally, moving the first side wall cleaning arm and/or the second side wall cleaning arm from the cleaning position into the insertion position;
extending the extendable arm in the entry direction so that the cleaning tool enters the container at the trailing end and is moved from the trailing end towards the leading end, while the first side wall cleaning arm and/or the second side wall cleaning arm is in the insertion position;
before, during or after extending the extendable arm in the entry direction, activating the set of one or more nozzles to spray cleaning fluid;
moving the first side wall cleaning arm and/or the second side wall cleaning from the insertion position into the cleaning position; and
retracting the extendable arm in a direction opposite the entry direction so that the cleaning tool is moved between the leading end and the trailing end.

15. Method for cleaning the inside of a container according to claim 14, wherein at least one of the first side wall cleaning arm and the second side wall cleaning is moved from the insertion position into the cleaning position after the cleaning tool has reached the leading end of the container; or.
wherein the at least one of the first side wall cleaning arm and the second side wall cleaning arm is moved from the insertion position into the cleaning position after activation of the set of one or more nozzles to spray cleaning fluid onto the inner surface of the container; and/or.
wherein the container has a leading wall at the leading end and a bottom wall, wherein the cleaning tool further comprises a leading set of one or more nozzles arranged for spraying cleaning fluid in a direction substantially parallel to the entry direction, wherein the cleaning tool comprises a cleaning bar at the cleaning tool body at a side thereof facing away from the base of the cleaning system, wherein the leading set of one or more nozzles is arranged at the cleaning bar, wherein the cleaning bar is moveable with respect to the cleaning tool body along a cleaning path in a substantially vertical direction, wherein the cleaning path is an L-shaped cleaning path having a substantially vertical first path part and a substantially horizontal second path part, wherein the second path part is located at the bottom side of the cleaning tool body and extends from the first path part in a direction towards the base of the cleaning system, wherein the leading set of one or more nozzles is arranged for spraying cleaning fluid in a direction substantially transverse to the cleaning path and away from the cleaning tool body, wherein the method further comprises the steps of:
when the cleaning tool is at or near the leading wall, activating the leading set of one or more nozzles to spray cleaning fluid;
optionally, moving the cleaning bar towards the top of the first path part;
moving the cleaning bar along the L-shaped cleaning path over the first path part, thereby cleaning the leading wall, and thereafter, moving the cleaning bar along the L-shaped cleaning path over the second path part, thereby cleaning the bottom wall of the container partially;
when the cleaning bar is at the second path part, retracting the extendable arm in a direction opposite the entry direction so that the cleaning tool is moved between the leading end and the trailing end.
